# EUROPEAN PATENT APPLICATION

(11) **EP 3 514 420 A1**
(43) Date of publication of application: **24.07.2019**
(21) Application number: 18165667.9
(22) Date of filing: 04.04.2018
(51) Int. Cl.: F16K 11/10, F16K 17/04

(54) **FIVE-WAY VALVE**

(30) Priority: 19.01.2018 CN 201810054450
(71) Applicant: Ningbo Jinyu Electric Appliance Co., Ltd., Yuyao City, Zhejiang (CN)
(72) Inventor: SHI, Junda, Yuyao City, Zhejiang (CN); SHI, Zhongyu, Yuyao City, Zhejiang (CN); LIU, Shukuo, Yuyao City, Zhejiang (CN); LI, Shunhua, Yuyao City, Zhejiang (CN)
(74) Representative: Herrero & Asociados, S.L.

(57) **Abstract**

The present invention discloses a five-way valve, wherein the five-way valve comprises a valve body provided with a water inlet, a first water outlet, a second water outlet, a third water outlet and a pressure relief opening which are communicated with an interior of the valve body successively from top to bottom; a movable element assembly and a sealing ring assembly which are respectively configured to control the opening and closing of each water outlet are provided inside the valve body; and the sealing ring assembly is fixedly mounted on the movable element assembly, and a bottom end of the movable element assembly is abutted against an inner side of a bottom end of the valve body by elastic elements. With regard to the five-way valve in the present invention, two chambers are formed in the valve body by the arrangement of the movable elements, and by different water flow pressures in the valve body, the introduction of pressure into two piston chambers can be controlled at different time; and the pressures in the two chambers can be relieved successively from a same outlet after the water feed and pressure supply is stopped. The five-way valve can be used to replace the electromagnetic valve, and it can control the successive flowing of water into or out of the two water outlets and also the communication between all water inlets and outlets. The five-way valve is simple in structure, low in manufacturing cost and more convenient for application and popularization.

## Description

### TECHNICAL FIELD OF THE INVENTION

The present invention relates to the field of flow transfer valves and in particular to a five-way valve.

### BACKGROUND OF THE INVENTION

In the prior art, flow transfer valves are almost controlled by electromagnetic valves which can cooperate with different circuits to achieve the desired control of which both the accuracy and flexibility can be guaranteed. There are many kinds of electromagnetic valves and different electromagnetic valves work at different positions of control systems. The most commonly used ones are one-way valves, safety valves, directional control valves, speed governing valves, etc. However, the requirements on the machining accuracy of the parts of the electromagnetic valves are high, and the commonly used electromagnetic valves have a single emptying and pressure relief function, that is, the common electromagnetic valves are provided with only one chamber for relieving pressure and emptying. As a result, it is required to replace different electromagnetic valves for fluids at different pressures, or different pressures of the fluid will cause different degrees of damage to the transfer valve with a single chamber, thus affecting the service life.

### DESCRIPTION OF THE INVENTION

An objective of the present invention is to provide a five-way valve to solve the technical problems in the prior art. In case of different fluid pressures, the five-way valve can control the introduction of pressure into two piston chambers at different time, and the pressures in the two chambers can be relieved successively from a same outlet after the water feed and pressure supply is stopped, so that the five-way valve meets the use requirements of a transfer valve while guaranteeing the service life of the transfer valve.

For this purpose, the present invention provides the following technical solution. The present invention provides a five-way valve, which comprises a valve body provided with a water inlet, a first water outlet, a second water outlet, a third water outlet and a pressure relief opening which are communicated with an interior of the valve body successively from top to bottom; a movable element assembly and a sealing ring assembly which are respectively configured to control the opening and closing of each water outlet are provided inside the valve body; and the sealing ring assembly is fixedly mounted on the movable element assembly, and a bottom end of the movable element assembly is abutted against an inner side of a bottom end of the valve body by elastic elements.

Optionally, the first water outlet and the second water outlet are arranged on two sides of an upper portion of the valve body, and the third water outlet is located below the first water outlet and the second water outlet.

Optionally, a first step and a second step are also arranged in the valve body successively, and an inner diameter of the first step is greater than that of the second step.

Optionally, the movable element assembly comprises a first movable element and a second movable element, the sealing ring assembly comprises a first sealing ring, and a top circular truncated cone of the first movable element is hollow in the middle; the first sealing ring is mounted at a bottom end of the top circular truncated cone having an outer diameter greater than the inner diameter of the first step; an outer diameter of a bottom end body, which is hollow, of the first movable element is less than or equal to the inner diameter of the first step; and a top end of the second movable element is located at a hollow position of the bottom end body of the first movable element and abutted against the hollow position in the middle of the top circular truncated cone.

Optionally, the second movable element is cross-shaped; and the sealing ring assembly further comprises a second sealing ring mounted at the top end of the second movable element and a third sealing ring mounted on an outer side of a transverse body of the second movable element.

Optionally, an outer diameter of the transverse body of the second movable element is greater than the inner diameter of the second step.

Optionally, an outer diameter of the bottom end body of the second movable element is less than or equal to the inner diameter of the second step.

Optionally, the elastic elements are springs which are sleeved on the bottom end body of the second movable element, and a bottom end of each spring is located on an inner side of the pressure relief opening and abutted against the bottom end of the valve body.

Compared with the prior art, the present invention has the following technical effects.

With regard to the five-way valve in the present invention, two chambers are formed in the valve body by the arrangement of the movable elements, and by different water flow pressures in the valve body, the introduction of pressure into two piston chambers can be controlled at different time; and the pressures in the two chambers can be relieved successively from a same outlet after the water feed and pressure supply is stopped. The five-way valve can be used to replace the electromagnetic valve, and it can control the successive flowing of water into or out of the two water outlets and also the communication between all water inlets and outlets. The five-way valve is simple in structure, low in manufacturing cost and more convenient for application and popularization.

### BRIEF DESCRIPTION OF THE DRAWINGS

To describe the technical solutions in the embodiments of the present invention or in the prior art more clearly, the accompanying drawings to be used in the description of the embodiments will be briefly described below. Apparently, the drawings described hereinafter are some of the embodiments of the present invention, and a person of ordinary skill in the art can obtain other drawings according to these drawings without any creative effort.

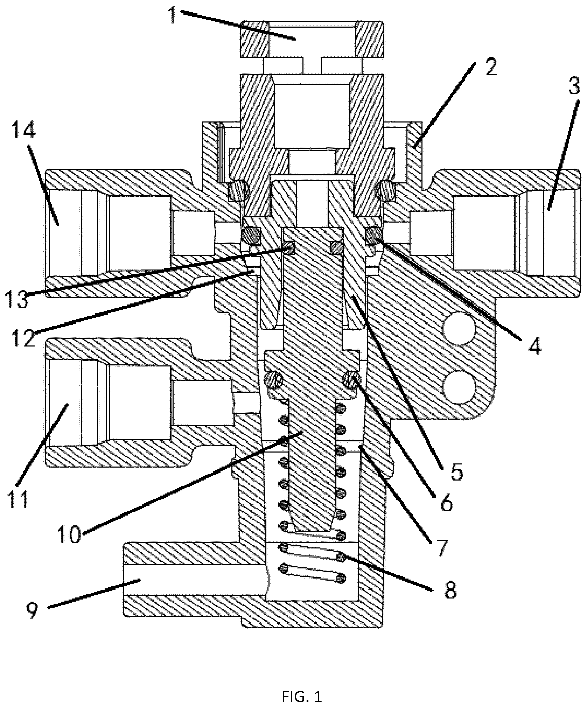

Fig. 1 is an overall structure diagram of a five-way valve according to the present invention.

### PREFERRED EMBODIMENT OF THE INVENTION

The technical solutions in the embodiments of the present invention will be clearly and completely described below with reference to the accompanying drawings in the embodiments of the present invention. Apparently, the embodiments described herein are merely a part but not all of the embodiments of the present invention. All other embodiments obtained by a person of ordinary skill in the art without any creative effort on the basis of the embodiments in the present invention shall fall into the protection scope of the present invention.

An objective of the present invention is to provide a five-way valve to solve the technical problems in the prior art. In case of different water flow pressures, the five-way valve can control the introduction of pressure into two piston chambers at different time; and the pressures in the two chambers can be relieved successively from a same outlet after the water feed and pressure supply is stopped, so that the five-way valve meets the use requirements of a transfer valve while guaranteeing the service life of the transfer valve.

The five-way valve of the present invention comprises a valve body provided with a water inlet, a first water outlet, a second water outlet, a third water outlet and a pressure relief opening which are communicated with an interior of the valve body successively from top to bottom; a movable element assembly and a sealing ring assembly which are respectively configured to control the opening and closing of each water outlet are provided inside the valve body; and the sealing ring assembly is fixedly mounted on the movable element assembly, and a bottom end of the movable element assembly is abutted against an inner side of a bottom end of the valve body by elastic elements.

The water flows in the chambers from the water inlet, and the movable element assembly and the sealing ring assembly adjust the opening and closing of each water outlet according to different flow pressures, thus achieving the introduction of pressure into multiple chambers of the valve body at different time.

To make the foregoing objectives, features and advantages of the present invention clearer or easier to understand, the present invention will be further described in detail as below with reference to the accompanying drawings by the specific embodiments.

Fig. 1 is an overall structure diagram of the five-way valve according to the present invention.

As shown in Fig. 1, the present invention provides a five-way valve, which comprises a valve body 2 provided with a water inlet 1, a first water outlet 3, a second water outlet 14, a third water outlet 11 and a pressure relief opening 9 which are communicated with an interior of the valve body 2 successively from top to bottom; a movable element assembly and a sealing ring assembly which are respectively configured to control the opening and closing of each water outlet are provided inside the valve body 2; and the sealing ring assembly is fixedly mounted on the movable element assembly, and a bottom end of the movable element assembly is abutted against an inner side of a bottom end of the valve body 2 by elastic elements.

The first water outlet 3 and the second water outlet 14 are arranged on two sides of an upper portion of the valve body 2 and may be arranged at the same level or in a staggered manner, and the third water outlet 11 is located below the first water outlet 3 and the second water outlet 14. A first step 12 and a second step 7 are also arranged in the valve body 2 successively, and an inner diameter of the first step 12 is greater than that of the second step 7. The movable element assembly comprises a first movable element 5 and a second movable element 10, the sealing ring assembly comprises a first sealing ring 4, and a top circular truncated cone of the first movable element 5 is hollow in the middle. The first sealing ring 4 is mounted at a bottom end of the top circular truncated cone having an outer diameter greater than the inner diameter of the first step 12; an outer diameter of a bottom end body, which is hollow, of the first movable element 5 is less than or equal to the inner diameter of the first step 12; and a top end of the second movable element 10 is located at a hollow position of the bottom end body of the first movable element 5 and abutted against the hollow position in the middle of the top circular truncated cone.

The second movable element 10 is cross-shaped; and the sealing ring assembly further comprises a second sealing ring 13 mounted at the top end of the second movable element 10 and a third sealing ring 6 mounted on an outer side of a transverse body of the second movable element 10. An outer diameter of the transverse body of the second movable element 10 is greater than the inner diameter of the second step 7, and an outer diameter of the bottom end body of the second movable element 10 is less than or equal to the inner diameter of the second step 7.

The elastic elements can employ springs 8 which are sleeved on the bottom end body of the second movable element 10, and a bottom end of each spring 8 is located on an inner side of the pressure relief opening 9 and abutted against the bottom end of the valve body 2.

The five-way valve in the present invention is operated according to the specific processes as follows:
The water at a certain pressure flows in the chambers from the water inlet 1, and at this moment, the water inlet 1, the first water outlet 3, the second water outlet 14, the third water outlet 11 and the pressure relief opening 9 are communicated with each other.

When the water pressure between the water inlet 1 and the first movable element 5 reaches the press-down pressure value of the first movable element 5, the first movable element 5 moves downwards along with the first sealing ring 4 until both are clamped at the first step 12. At this moment, the water inlet 1, the first water outlet 3 and the second water outlet 14 are communicated with each other. The third water outlet 11 and the pressure relief opening 9 are blocked by the first sealing ring 4 and the second sealing ring 13.

When the pressure among the water inlet 1, the first water outlet 3 and the second water outlet 14 reaches the rated value, the second movable element 10 as well as the second sealing ring 13 and the third sealing ring 6 which are sleeved on the second movable element 10 are pushed to move downwards until all move to a certain distance, the water inlet 1, the first water outlet 3, the second water outlet 14 and the third water outlet 11 are communicated with each other; and when the third sealing ring 6 moves onto the second step 7 and is then clamped, the pressure relief port 9 is blocked.

When the water inlet 1 stops supplying water, the pressure of the upper portion of the valve body 2 is restored, and the spring 8 pushes the second movable element 10 upwards. At this moment, first, the pressure relief opening 9 is communicated with each water outlet, and then the rest five ways are communicated with each other.

It should be noted that the names and the arrangement positions of all components of the five-way valve in the present invention are not limited, and the replacement of the name of a single component or the obvious replacement of a certain component shall fall into the protection scope of the present invention as long as it conforms to the basic principle of the present invention. The embodiment of the present invention includes two chambers, and the possible increase or decrease in the number of chambers and steps during the actual use and arrangement shall also fall into the protection scope of the present invention.

Although the principle and implementations of the present invention have been described above by specific examples in the present invention, the foregoing description of the embodiments is merely for helping understand the method and core idea of the present invention. Meanwhile, various alterations to the specific implementations and applications may come to a person of ordinary skill in the art according to the concept of the present invention. In conclusion, the contents of the description shall not be regarded as limitations to the present invention.

### LIST OF REFERENCES

1: water inlet;
2: valve body;
3: first water outlet;
4: first sealing ring;
5: first movable element;
6: third sealing ring;
7: second step;
8: spring;
9: pressure relief opening;
10: second movable element;
11: third water outlet;
12: first step;
13: second sealing ring; and
14: second water outlet.

## Claims

1. A five-way valve, wherein the five-way valve comprises a valve body provided with a water inlet, a first water outlet, a second water outlet, a third water outlet and a pressure relief opening which are communicated with an interior of the valve body successively from top to bottom; a movable element assembly and a sealing ring assembly which are respectively configured to control the opening and closing of each water outlet are provided inside the valve body; and the sealing ring assembly is fixedly mounted on the movable element assembly, and a bottom end of the movable element assembly is abutted against an inner side of a bottom end of the valve body by elastic elements.

2. The five-way valve according to claim 1, wherein the first water outlet and the second water outlet are arranged on two sides of an upper portion of the valve body, and the third water outlet is located below the first water outlet and the second water outlet.

3. The five-way valve according to claim 1, wherein a first step and a second step are also arranged in the valve body successively, and an inner diameter of the first step is greater than that of the second step.

4. The five-way valve according to claim 3, wherein the movable element assembly comprises a first movable element and a second movable element, the sealing ring assembly comprises a first sealing ring, and a top circular truncated cone of the first movable element is hollow in the middle; the first sealing ring is mounted at a bottom end of the top circular truncated cone having an outer diameter greater than the inner diameter of the first step; an outer diameter of a bottom end body, which is hollow, of the first movable element is less than or equal to the inner diameter of the first step; and a top end of the second movable element is located at a hollow position of the bottom end body of the first movable element and abutted against the hollow position in the middle of the top circular truncated cone.

5. The five-way valve according to claim 4, wherein the second movable element is cross-shaped; and the sealing ring assembly further comprises a second sealing ring mounted at the top end of the second movable element and a third sealing ring mounted on an outer side of a transverse body of the second movable element.

6. The five-way valve according to claim 5, wherein an outer diameter of the transverse body of the second movable element is greater than the inner diameter of the second step.

7. The five-way valve according to claim 5, wherein an outer diameter of the bottom end body of the second movable element is less than or equal to the inner diameter of the second step.

8. The five-way valve according to claim 7, wherein the elastic elements are springs which are sleeved on the bottom end body of the second movable element, and a bottom end of each spring is located on an inner side of the pressure relief opening and abutted against the bottom end of the valve body.
